# EUROPEAN PATENT APPLICATION

(11) **EP 2 045 063 A1**
(43) Date of publication of application: **08.04.2009**
(21) Application number: 07425610.8
(22) Date of filing: 02.10.2007
(51) Int. Cl.: B29C 39/10, B29C 43/18, B29C 45/14, B29B 17/00

(54) **Process for producing a weight-increased manufactured article made of rubber granules**

(71) Applicant: Casei Eco System S.R.L., 15057 Tortona (AL) (IT)
(72) Inventor: Ferrarini, Marco, 15057 Tortona (AL) (IT)
(74) Representative: Garavelli, Paolo

(57) **Abstract**

A process is described for producing a weight-increased manufactured article made of rubber granules comprising the steps of providing an amount Q₁ of rubber granules; providing an amount Q₂ of weight-increasing inert material; forming an amalgam by mutually mixing the rubber granules and the weight-increasing inert material adding at least one polyurethane resin; filling at least one die with the amalgam; moulding the amalgam to obtain the manufactured article; and extracting the manufactured article from the die.

## Description

The present invention refers to a process for producing a weight-increased manufactured article made of rubber granules.

It is known in the art to use rubber, above all recycled rubber in the form of granules, for producing many different manufactured articles.

The use of rubber, above all rubber deriving from run-down vehicle tires, in fact allows a more efficient production of the above manufactured articles, at the same time resulting in a valid support for recycling policies, that are more and more up-to-date in almost all Countries in the world. Moreover, such rubber devices have the advantages of not rusting, not discolouring, not chipping and not generating damages, at most very small damages, in case of slight impacts, due to their softer consistency against impacts with respect to manufactured articles realised with traditionally much harder and stiffer materials.

However, given the particular lightness of such granules, the manufactured articles produced thereby are consequently very lightweight, above all if compared with similar products made of metal, concrete, stone or other more traditional, building materials. If such characteristic has a scarce relevance for manufactured articles such as, for example, tiles whose laying is not affected thereby, if, instead, other manufactured articles, such as for example urban furniture like benches, have to be produced with the same granules, these articles would have to be ballasted or anchored in some way to avoid that they can be removed or displaced, even only by particular atmospheric conditions, such as a particularly intense wind.

As remedy to such problem, the prior art proposes some manufactured articles whose weight increase is demanded to an internal metal core to be covered with recycled rubber granules, making however the production of the manufactured articles more complex and less inexpensive.

Therefore, object of the present invention is solving the above prior art problems by providing a process for producing a weight-increased manufactured article made of rubber granules in which a weight-increasing inert material is mixed in the amalgam of rubber granules, thereby not requiring the use of separate metallic or plastic structures, as instead provided by the known prior art.

The above and other objects and advantages of the invention, as will result from the following description, are obtained by a process for producing a weight-increased manufactured article made of rubber granules as described in claim 1. Preferred embodiments and non-trivial variations of the present invention are the subject matter of the enclosed claims.

It will be immediately obvious that numerous variations and modifications could be made to the described process, without departing from the scope of the invention as appears from the enclosed claims.

Moreover, the present invention will be better described by some preferred embodiments thereof, provided as a non-limiting example.

The present invention refers to a process for producing a weight-increased manufactured article made of rubber granules, having any shape, size and functionality. The process according to the present invention comprises therefore the steps of:
a) providing an amount Q₁ of rubber granules;
b) providing an amount Q₂ of weight-increasing inert material;
c) forming an amalgam by mutually mixing the rubber granules and the weight-increasing inert material adding at least one polyurethane resin;
d) filling at least one die with an adequate shape with the amalgam obtained in the previous step;
e) moulding the amalgam to obtain the desired manufactured article. In particular, moulding can occur both hot and cold; in this latter case, the die is heated at a temperature preferably included between 110°C and 170°C; and
f) extracting the manufactured article from the die.

If a coloured manufactured article has to be obtained, step c) of the process according to the present invention could comprise the substep of adding a colouring paste to the amalgam in the most suitable amounts.

In order to more strongly link the various components of the manufactured article one to the other, step d) of the process according to the present invention could comprise the substep of inserting at least one reinforcing structure inside the amalgam, such structure being preferably of the cage or trellis type, still more preferably made of metallic material.

Though it is clear that the granules composing the manufactured article produced with the process according to the present invention can be derived from any type of rubber adequate for this purpose, preferably they are derived from recycled tires (SBR) that afterwards are cleaned from ply, iron and other residuals and triturated. Obviously, the size of the rubber granules could be various, resulting in different levels of porosity and/or surface roughness of the manufactured article. In particular, the Applicant has found that the mean size of the rubber granule should be preferably included between 0.5 mm and 13 mm, still more preferably included between 0.8 mm and 10 mm.

Obviously, the weight-increasing inert material could be of any type and/or nature that allows its mixing, amalgam and moulding with the other components of the manufactured article. In general, the weight-increasing inert material will have a specific weight greater than the weight of the rubber granules. In particular, the weight-increasing inert material could be of a granular shape, such as sand, of an heterogeneous form, such as for example metal filings. Anyway, preferably, the weight-increasing inert material is composed of cobblestones of various nature, that are one of the most inexpensive and efficient solutions for realising the traffic- and parking-preventing element 1 according to the present invention.

Obviously, the polyurethane resin can be of any type and/or nature suitable for the purpose of the present invention. In particular, anyway, the polyurethane resin is preferably an isocianate.

The present invention further refers to a weight-increased manufactured article made of rubber granules obtained according to the process of the present invention.

## Claims

1. Process for producing a weight-increased manufactured article made of rubber granules, **characterised in that** it comprises the steps of:
a) providing an amount Q₁ of rubber granules;
b) providing an amount Q₂ of weight-increasing inert material;
c) forming an amalgam by mutually mixing said rubber granules and said weight-increasing inert material adding at least one polyurethane resin;
d) filling at least one die with said amalgam;
e) moulding said amalgam to obtain said manufactured article; and
f) extracting said manufactured article from said die.

2. Process according to claim 1, **characterised in that** step c) comprises the substep of adding at least one colouring paste inside said amalgam.

3. Process according to claim 1, **characterised in that** said polyurethane resin is an isocianate.

4. Process according to claim 1, **characterised in that** step d) comprises the substep of inserting at least one internal reinforcement structure inside said amalgam.

5. Process according to claim 1, **characterised in that** step d) comprises the substep of heating said die at a temperature preferably included between 110°C and 170°C.

6. Process according to claim 4, **characterised in that** said internal reinforcement structure is metallic.

7. Process according to claim 4, **characterised in that** internal reinforcement structure is a cage.

8. Process according to claim 4, **characterised in that** internal reinforcement structure is of a trellis type.

9. Process according to claim 1, **characterised in that** a mean diameter of said rubber granule is preferably included between 0.5 mm and 13 mm, still more preferably included between 0.8 mm e 10 mm.

10. Process according to claim 1, **characterised in that** said weight-increasing inert material is sand.

11. Process according to claim 1, **characterised in that** said weight-increasing inert material are metal filings.

12. Process according to claim 1, **characterised in that** said weight-increasing inert material are cobblestones.

13. Weight-increased manufactured article made of rubber granules produced according to the process of claim 1.
